# EUROPEAN PATENT APPLICATION

(11) **EP 1 139 279 A2**
(43) Date of publication of application: **04.10.2001**
(21) Application number: 01104885.7
(22) Date of filing: 28.02.2001
(51) Int. Cl.: G06K 19/07

(54) **Card-type recording medium and card-type recording medium reader**

(30) Priority: 29.02.2000 JP 2000053957
(71) Applicant: Fuetrek Co., Ltd., Osaka (JP)
(72) Inventor: Ishibe, Hiroshi, c/o Fuetrek Co., Ltd., Yodogawa-ku, Osaka-shi, Osaka 532-0011 (JP)
(74) Representative: Winter, Brandl, Fürniss, Hübner, Röss, Kaiser, Polte Partnerschaft

(57) **Abstract**

A mask ROM is employed for a semiconductor memory. The mask ROM records information in the stage of manufacturing so that the information cannot be thereafter rewritten. However, the manufacturing cost therefor can be reduced as compared with a nonvolatile memory such as an EEPROM, and it is optimal for recording contents requiring no rewriting. Thus, a card-type recording medium employing a semiconductor memory recording contents requiring no rewriting, which is at a lower manufacturing cost as compared with a nonvolatile memory such as an EEPROM, is provided.

## Description

### BACKGROUND OF THE INVENTION

### Field of the Invention

The present invention relates to a card-type recording medium (hereinafter referred to as a memory card) such as an IC card loaded with a semiconductor memory for recording information as well as an IC chip and a control circuit for data input/output control therein.

### Description of the Background Art

Following the progress and cost reduction of semiconductor device manufacturing techniques, a recording medium recording information in a semiconductor memory is now in the process of popularization. This recording medium is the memory card, which comprises a semiconductor memory for recording information therein along with an IC chip and a control circuit for control.

The semiconductor memory records image information of motion pictures, still pictures etc., sound information of voice, music etc. character·symbol information of text data, numerical data etc., computer programs and information such as data used in a specific computer program. Throughout the specification, such information is referred to as contents.

A nonvolatile memory such as an EEPROM (electrically erasable and programmable random access memory) capable of writing information is generally employed as the semiconductor memory loaded on a conventional memory card. This is in consideration of that the user of the card-type recording medium rewrites information.

However, the manufacturing cost for the nonvolatile memory such as an EEPROM is so high that the unit price of the memory card is increased as the capacity thereof is increased.

When recording contents requiring no rewriting in the memory card, there is only little advantage in employment of the nonvolatile memory and no effect corresponding to the manufacturing cost can be attained.

### SUMMARY OF THE INVENTION

A card-type recording medium according to a first aspect of the present invention comprises a connector for connection with an external device, a mask ROM recording compressed data generated -by compressing data of contents utilized in the external device by a prescribed compression method and output means connected to the connector and the mask ROM for outputting the compressed data to the external device through the connector.

According to the first aspect, the card-type recording medium employs the mask ROM as a semiconductor memory, whereby the manufacturing cost thereof can be remarkably reduced as compared with a nonvolatile memory such as an EEPROM, and it is optimal for recording contents requiring no rewriting. Further, the data of the contents is compressed by the prescribed compression method and recorded, whereby the card-type recording medium can record a large quantity of information. When selecting a compression method capable of most efficiently compressing the contents as the prescribed compression method, the card-type recording medium can record a larger quantity of information.

According to a second aspect of the present invention, the mask ROM further records information for identifying the prescribed compression method.

According to the second aspect, the mask ROM also records the information for identifying the prescribed compression method along with the compressed data, whereby the external device can expand the compressed data by externally reading the information for identifying the compression method before reading the compressed data and by externally preparing a prescribed expansion method corresponding to the compression method.

According to a third aspect of the present invention, the mask ROM further records program data describing a program of a prescribed expansion method corresponding to the prescribed compression method, and the output means includes a microprocessor connected to the connector and the mask ROM for expanding the compressed data by the prescribed expansion method with the program data and outputting consequently obtained expanded data to the external device through the connector.

According to the third aspect, the mask ROM also records the program data of the prescribed expansion method corresponding to the compression method along with the compressed data while the microprocessor expands the compressed data by the prescribed expansion method and outputs the same to the external device, whereby the external device may not prepare the program data of the expansion method.

A card-type recording medium according to a fourth aspect of the present invention comprises a connector for connection with an external device, a mask ROM recording error correction-coded data, to which a prescribed error correction code is appended, of contents utilized in the external device and output means connected to the connector and the mask ROM for outputting the error correction-coded data to the external device through the connector.

According to the fourth aspect, the card-type recording medium employs the mask ROM as a semiconductor memory, whereby the manufacturing cost thereof can be remarkably reduced as compared with a nonvolatile memory such as an EEPROM, and it is optimal for recording contents requiring no rewriting. Further, the mask ROM records the error correction-coded data, whereby reliability of the data can be improved by performing error correction in the external device receiving the data.

A card-type recording medium according to a fifth aspect of the present invention comprises a connector for connection with an external device, a mask ROM recording error correction-coded data, to which a prescribed error correction code is appended, of contents utilized in the external device and error correction means connected to the connector and the mask ROM for correcting an error of the error correction-coded data by a prescribed error correction method corresponding to the prescribed error correction code and outputting consequently obtained corrected data to the external device through the connector.

According to the fifth aspect, the card-type recording medium employs the mask ROM as a semiconductor memory, whereby the manufacturing cost thereof can be remarkably reduced as compared with a nonvolatile memory such as an EEPROM, and it is optimal for recording contents requiring no rewriting. Further, the error correction means corrects an error of the error correction-coded data recorded in the mask ROM by the prescribed error correction method and outputs the data to the external device, whereby the external device may not prepare the program data of the error correction method.

According to a sixth aspect of the present invention, the mask ROM further records program data describing a program of the prescribed error correction method corresponding to the prescribed error correction code, and the error correction means includes a microprocessor connected to the connector and the mask ROM for correcting the error of the error correction-coded data by the prescribed error correction method with the program data and outputting the consequently obtained corrected data to the external device through the connector.

According to the sixth aspect, the card-type recording medium employs the mask ROM as a semiconductor memory, whereby the manufacturing cost thereof can be remarkably reduced as compared with a nonvolatile memory such as an EEPROM, and it is optimal for recording contents requiring no rewriting. Further, the mask ROM further records program data describing a program of the prescribed error correction method corresponding to the prescribed error correction code, along with the error correction-coded data. And the microprocessor corrects the error of the error correction-coded data by the prescribed error correction method and outputs the corrected data to the external device, whereby it is not necessary to prepare a circuit for error correction as the error correction means and a circuit for outputting the corrected data, individually. Consequently, it is possible to miniaturize the recording medium.

A card-type recording medium according to a seventh aspect of the present invention comprises a connector for connection with an external device, a mask ROM recording data, to which information related to duplication and copyright of data is appended, of contents utilized in the external device and output means connected to the connector and the mask ROM for outputting the data of the contents to the external device through the connector.

According to the seventh aspect, the card-type recording medium employs the mask ROM as a semiconductor memory, whereby the manufacturing cost thereof can be remarkably reduced as compared with a nonvolatile memory such as an EEPROM, and it is optimal for recording contents requiring no rewriting. Further, the mask ROM records the data of the contents to which the information related to duplication and copyright of the data is appended, whereby the card-type recording medium can protect the data.

A card-type recording medium according to an eight aspect of the present invention comprises a connector for connection with an external device, a mask ROM recording data of contents utilized in the external device and encryption means connected to the connector and the mask ROM for encrypting the contents by a prescribed encryption method and outputting consequently obtained encrypted data to the external device through the connector.

According to the eighth aspect, the card-type recording medium employs the mask ROM as a semiconductor memory, whereby the manufacturing cost thereof can be remarkably reduced as compared with a nonvolatile memory such as an EEPROM, and it is optimal for recording contents requiring no rewriting. Further, the encryption means encrypts the contents by the prescribed encryption method and outputs the encrypted data to the external device, whereby the card-type recording medium can protect the data.

A card-type recording medium according to a ninth aspect of the present invention comprises a connector for connection with an external device, a mask ROM recording data of contents utilized in the external device, output means connected to the connector and the mask ROM for outputting the data to the external device through the connector and a card-type sheath sheathing the connector and the mask ROM as well as the output means, while a display purporting that the card-type recording medium is read-only is made on the sheath.

According to the ninth aspect, the sheath makes the display purporting that the card-type recording medium is read-only, whereby the user can distinguish the inventive card-type recording medium from a conventional card-type recording medium through the appearance.

A card-type recording medium according to a tenth aspect of the present invention comprises a connector for connection with an external device, a mask ROM recording data of contents utilized in the external device, output means connected to the connector and the mask ROM for outputting the data to the external device through the connector and a card-type sheath sheathing the connector and the mask ROM as well as the output means, while a molded part purporting that the card-type recording medium is read-only is formed on the surface of the sheath.

According to the tenth aspect, the molded part purporting that the card-type recording medium is read-only is formed on the surface, whereby the user can distinguish the inventive card-type recording medium from a conventional card-type recording medium not only through the appearance but through the sense of touch.

A card-type recording medium according to an eleventh aspect of the present invention comprises a connector for connection with an external device, a mask ROM recording data of contents utilized in the external device;, output means connected to the connector and the mask ROM for outputting the data to the external device through the connector and a card-type sheath sheathing the connector and the mask ROM as well as the output means, while a notch or a hole purporting that the card-type recording medium is read-only is formed on the surface of the sheath.

According to the eleventh aspect, the notch or the hole purporting that the card-type recording medium is read-only is so formed that a reader corresponding to the card-type recording medium can distinguish the inventive card-type recording medium from a conventional card-type recording medium by mechanically or optically recognizing the notch or the hole when the card-type recording medium is inserted in the reader. And furthermore, the user can distinguish the former from the latter through the appearance.

A card-type recording medium according to a twelfth aspect of the present invention comprises a connector for connection with an external device, a mask ROM recording data of contents utilized in the external device, output means connected to the connector and the mask ROM for outputting the data to the external device through the connector and a card-type sheath sheathing the connector and the mask ROM as well as the output means, while a light reflector purporting that the card-type recording medium is read-only is formed on the surface of the sheath.

According to the twelfth aspect, the light reflector purporting that the card-type recording medium is read-only is so formed on the surface that a reader corresponding to the card-type recording medium can distinguish the inventive card-type recording medium from a conventional card-type recording medium by optically recognizing the light reflector when the card-type recording medium is inserted in the reader. And furthermore, the user can distinguish the former from the latter through the appearance.

A card-type recording medium according to a thirteenth aspect of the present invention comprises a connector for connection with an external device, a mask ROM recording data of contents utilized in the external device, output means connected to the connector and the mask ROM for outputting the data to the external device through the connector and means generating a magnetic field or means cutting off a magnetic field purporting that the card-type recording medium is read-only.

According to the thirteenth aspect, the means generating a magnetic field or the means cutting off a magnetic field purporting that the card-type recording medium is read-only is so provided that a reader corresponding to the card-type recording medium can distinguish the inventive card-type recording medium from a conventional card-type recording medium by magnetically recognizing the means generating a magnetic field or the means cutting off a magnetic field when the card-type recording medium is inserted in the reader.

A card-type recording medium according to a fourteenth aspect of the present invention comprises a connector for connection with an external device, a mask ROM recording data of contents utilized in the external device, output means connected to the connector and the mask ROM for outputting the data to the external device through the connector and a card-type sheath sheathing the connector and the mask ROM as well as the output means, while the sheath is provided with a fixed write protect switch including a write protect switch integrally formed on the sheath or a write protect switch formed by fixing a component.

According to the fourteenth aspect, the fixed write protect switch is so formed that a reader corresponding to the card-type recording medium performs no erroneous writing when the card-type recording medium is inserted therein. And furthermore, the user can distinguish the card-type recording medium through the appearance.

A card-type recording medium according to a fifteenth aspect of the present invention comprises a connector for connection with an external device, a mask ROM recording data of contents utilized in the external device and output means connected to the connector and the mask ROM for outputting the data to the external device through the connector, while the output means comprises a register recording information of a state related to writing of the card-type recording medium, and the register records information purporting that the card-type recording medium is read-only.

According to the fifteenth aspect, the register records the information purporting that the card-type recording medium is read-only, whereby the inventive card-type recording medium can be distinguished from a conventional card-type recording medium by externally reading the information from the register.

According to a sixteenth aspect of the present invention, when writing of information into the mask ROM is attempted from the external device through the connector, the output means outputs the purport that the writing is unsuccessful to the external device on the basis of the information recorded in the register.

According to the sixteenth aspect, the output means outputs the purport that writing is unsuccessful to the external device when writing of information in the mask ROM is attempted from the external device, whereby no subsequent writing is performed.

A card-type recording medium reader according to a seventeenth aspect of the present invention comprises read means reading data of contents from a card-type recording medium recording the data of the contents and recognition means recognizing whether or not the notch or the hole provided in the card-type recording medium according to the eleventh aspect is present in the card-type recording medium.

According to the seventeenth aspect, the recognition means recognizing the presence of the notch or the hole is so provided that the card-type recording medium reader can automatically read the data of the contents.

A card-type recording medium reader according to an eighteenth aspect of the present invention comprises read means reading data of contents from a card-type recording medium recording the data of the contents and recognition means recognizing whether or not the light reflector provided in the card-type recording medium according to the twelfth aspect is present in the card-type recording medium.

According to the eighteenth aspect, the recognition means recognizing the presence of the light reflector is so provided that the card-type recording medium reader can automatically read the data of the contents.

A card-type recording medium reader according to a nineteenth aspect of the present invention comprises read means reading data of contents from a card-type recording medium recording the data of the contents and recognition means recognizing whether or not the means generating a magnetic field or the means cutting off a magnetic field provided in the card-type recording medium according to the thirteenth aspect is present in the card-type recording medium.

According to the nineteenth aspect, the recognition means recognizing the presence of the means generating a magnetic field or the means cutting off a magnetic field is so provided that the card-type recording medium reader can automatically read the data of the contents.

A card-type recording medium reader according to a twentieth aspect of the present invention comprises read means reading data of contents from a card-type recording medium comprising a register recording information of a state related to writing and the data of the contents and recognition means recognizing whether or not information purporting that the card-type recording medium is read-only is present in the register of the card-type recording medium.

According to the twentieth aspect, the recognition means recognizing the information recorded in the register for purporting that the card-type recording medium is read-only is so provided that the card-type recording medium reader can automatically read the data of the contents.

According to a twenty-first aspect of the present invention, the card-type recording medium also records at least either a control program describing a procedure for expanding a function of the card-type recording medium reader or control data playing an auxiliary role when expanding the function of the card-type recording medium reader, the read means automatically reads the data of the contents and at least either the control program or the control data in response to the result of recognition in the recognition means, and the card-type recording medium reader expands the function with at least either the control program or the control data.

According to the twenty-first aspect, the read means also automatically reads the control program in response to the result of recognition in the recognition means and expands the function through the control program, whereby the card-type recording medium reader may not prepare the control program required in response to the contents recorded in the card-type recording medium.

According to a twenty-second aspect of the present invention, the card-type recording medium reader further comprises display means displaying the result of recognition in the recognition means.

According to the twenty-second aspect, the card-type recording medium reader further comprises the display means displaying the result of recognition, whereby the user can distinguish whether the card-type recording medium is the inventive card-type recording medium or a conventional card-type recording medium.

According to a twenty-third aspect of the present invention, the card-type recording medium also records at least either a control program describing a procedure for expanding a function of the card-type recording medium reader or control data playing an auxiliary role when expanding the function of the card-type recording medium reader, the read means automatically reads the data of the contents and at least either the control program or the control data in response to the result of recognition in the recognition means, and the card-type recording medium reader expands the function with at least either the control program or the control data.

According to the twenty-third aspect, the read means also automatically reads the control program in response to the result of recognition in the recognition means and expands the function through the control program, whereby the card-type recording medium reader may not prepare the control program required in response to the contents recorded in the card-type recording medium.

According to a twenty-fourth aspect of the present invention, the card-type recording medium reader further comprises display means displaying the result of recognition in the recognition means.

According to the twenty-fourth aspect, the card-type recording medium reader further comprises the display means displaying the result of recognition, whereby the user can distinguish whether the card-type recording medium is the inventive card-type recording medium or a conventional card-type recording medium.

According to a twenty-fifth aspect of the present invention, the card-type recording medium also records at least either a control program describing a procedure for expanding a function of the card-type recording medium reader or control data playing an auxiliary role when expanding the function of the card-type recording medium reader, the read means automatically reads the data of the contents and at least either the control program or the control data in response to the result of recognition in the recognition means, and the card-type recording medium reader expands the function with at least either the control program or the control data.

According to the twenty-fifth aspect, the read means also automatically reads the control program in response to the result of recognition in the recognition means and expands the function through the control program, whereby the card-type recording medium reader may not prepare the control program required in response to the contents recorded in the card-type recording medium.

According to a twenty-sixth aspect of the present invention, the card-type recording medium reader further comprises display means displaying the result of recognition in the recognition means.

According to the twenty-sixth aspect, the card-type recording medium reader further comprises the display means displaying the result of recognition, whereby the user can distinguish whether the card-type recording medium is the inventive card-type recording medium or a conventional card-type recording medium.

According to a twenty-seventh aspect of the present invention, the card-type recording medium also records at least either a control program describing a procedure for expanding a function of the card-type recording medium reader or control data playing an auxiliary role when expanding the function of the card-type recording medium reader, the read means automatically reads the data of the contents and at least either the control program or the control data in response to the result of recognition in the recognition means, and the card-type recording medium reader expands the function with at least either the control program or the control data.

According to the twenty-seventh aspect, the read means also automatically reads the control program in response to the result of recognition in the recognition means and expands the function through the control program, whereby the card-type recording medium reader may not prepare the control program required in response to the contents recorded in the card-type recording medium.

According to a twenty-eighth aspect of the present invention, the card-type recording medium reader further comprises display means displaying the result of recognition in the recognition means.

According to the twenty-eighth aspect, the card-type recording medium reader further comprises the display means displaying the result of recognition, whereby the user can distinguish whether the card-type recording medium is the inventive card-type recording medium or a conventional card-type recording medium.

An object of the present invention is to provide a card-type recording medium employing a semiconductor memory recording contents requiring no rewriting, which can be manufactured at a lower cost as compared with a nonvolatile memory such as an EEPROM.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 illustrates a memory card according to an embodiment 1 of the present invention;
Fig. 2 is a flow chart of a method of manufacturing a memory card according to an embodiment 2 of the present invention;
Fig. 3 illustrates a memory card according to an embodiment 3 of the present invention;
Fig. 4 illustrates contents data to which an error correction code is appended;
Fig. 5 illustrates a modification of the memory card according to the embodiment 3 of the present invention;
Fig. 6 is a flow chart of a method of manufacturing a memory card according to an embodiment 4 of the present invention;
Fig. 7 is a flow chart of a modification of the method of manufacturing a memory card according to the embodiment 4 of the present invention;
Fig. 8 illustrates a memory card according to an embodiment 5 of the present invention;
Fig. 9 illustrates a modification of the memory card according to the embodiment 5 of the present invention;
Fig. 10 illustrates a memory card according to an embodiment 6 of the present invention;
Fig. 11 illustrates a memory card according to an embodiment 7 of the present invention;
Fig. 12 illustrates a memory card according to an embodiment 8 of the present invention;
Fig. 13 illustrates a memory card according to an embodiment 9 of the present invention;
Fig. 14 illustrates a memory card according to an embodiment 10 of the present invention;
Fig. 15 illustrates a memory card according to an embodiment 11 of the present invention;
Fig. 16 illustrates a memory card according to an embodiment 12 of the present invention; and
Figs. 17 and 18 illustrate a memory card reader according to an embodiment 13 of the present invention.

### DESCRIPTION OF THE PREFERRED EMBODIMENTS

### <Embodiment 1>

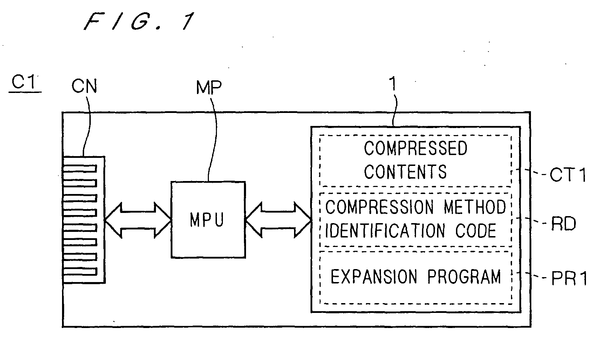

Fig. 1 illustrates a memory card C1 according to an embodiment 1 of the present invention. This memory card C1 comprises a mask ROM 1. The mask ROM 1 records information in the stage of manufacturing, and this information cannot be thereafter rewritten. However, the manufacturing cost for the mask ROM 1 can be remarkably reduced as compared with a nonvolatile memory such as an EEPROM, and it is optimal for recording contents requiring no rewriting.

The memory card C1 further comprises a microprocessor MP connected to the mask ROM 1 for outputting the information recorded in the mask ROM 1 to an external device. The memory card C1 also comprises a connector CN connected with the microprocessor MP for serving as an input/output interface with the external device.

In order to record a large quantity of information in the mask ROM 1, data of contents is preferably compressed. Referring to Fig. 1, the data of the contents is compressed by a prescribed compression method and recorded in the mask ROM 1 as compressed contents data CT1. The prescribed compression method is MPEG2 or MPEG4 and the like when the contents are image information, for example. When selecting a compression method capable of most efficiently compressing the contents as the prescribed compression method, the mask ROM 1 can record a larger quantity of information.

The mask ROM 1 may also record information related to an interface such as the standard and the protocol of the interface. Thus, proper transfer can be performed between the memory card C1 and the external device by referring to the information related to the interface when the microprocessor MP outputs the information recorded in the mask ROM 1 to the external device.

A code identifying each compression method may be previously defined respectively so that the mask ROM 1 records information indicating which compression method the aforementioned prescribed compression method is as a compression method identification code RD. Thus, with which compression method the contents have been recorded is immediately recognized by externally reading the compression method identification code RD. Therefore, the external device can expand the compressed contents data CT by reading the compression method identification code RD before reading the compressed contents data CT1 and by externally preparing a prescribed expansion method corresponding to the compression method.

Alternatively, the mask ROM 1 may record expansion program data PR1 describing the prescribed expansion method corresponding to the aforementioned prescribed compression method. The microprocessor MP reads and employs the expansion program data PR1 when expanding the information of the compressed contents data CT1 and outputting the same to the external device. The information of the expanded compressed contents data CT1 is output to the external device through the connector CN. When the mask ROM 1 also records the program data PR1 of the expansion method, the external device may not prepare the program data PR1 of the expansion method.

The memory card C1 according to this embodiment employs the mask ROM 1 as a semiconductor memory, whereby the manufacturing cost therefor can be remarkably reduced as compared with a nonvolatile memory such as an EEPROM, and it is optimal for recording contents requiring no rewriting. When the mask ROM 1 also records the compression method identification code RD, the external device can expand the compressed contents data CT1 by reading the compression method identification code RD before reading the compressed contents data CT1 and by preparing the prescribed expansion method corresponding to the compression method. When the mask ROM 1 also records the program data PR1 of the prescribed expansion method corresponding to the compression method along with the information of the compressed contents data CT1, the external device may not prepare the program data PR1 of the expansion method since the microprocessor MP expands the compressed contents data CT1 by the prescribed expansion method and outputs the same to the external device.

The connector CN is not restricted to that having a plurality of metal terminals provided on a substrate as shown in Fig. 1 but may alternatively be formed by that transmitting/receiving information to/from a reader for the memory card C1 by radio communication or optical communication, for example.

### <Embodiment 2>

An embodiment 2 of the present invention relates to a method of manufacturing the memory card C1 according to the embodiment 1.

As described with reference to the embodiment 1, the memory card C1 can record a larger quantity of information by selecting a compression method capable of most efficiently compressing the contents as the compression method for the data of the contents. In the embodiment 2, therefore, the compression method most efficient for the contents to be recorded is determined and selected for recording the data of the contents compressed by the method in the mask ROM 1 along with the program data PR1 of the expansion method corresponding thereto for manufacturing the memory card C1.

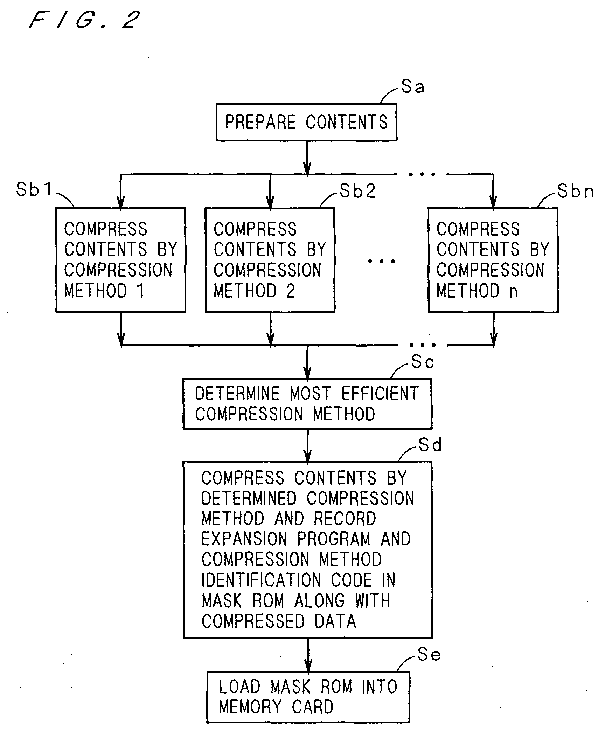

Fig. 2 is a flow chart showing the method of manufacturing the memory card C1 according to this embodiment.

First, the data of the contents to be recorded is prepared (step Sa). Then, the data of the contents prepared at the step Sa is compressed by respective compression methods. Referring to Fig. 2, the data of the contents is compressed every compression method with n compression methods (n: natural number) including a compression method 1, a compression method 2, ···, a compression method n (steps Sb1, Sb2, ···, Sbn).

Then, the most efficient method is determined among the n compression methods including the compression method 1, the compression method 2, ···, the compression method n (step Sc). In this case, the term "efficiency" stands for coding efficiency indicating how small the capacity of compressed data obtained by compression may be.

The data of the contents is compressed by the determined compression method, for recording the compressed contents data CT1 in the mask ROM 1 along with the corresponding expansion program PR1 and the corresponding compression method identification code RD (step Sd).

Then, the mask ROM 1 is connected with the microprocessor MP, which in turn is connected with the connector CN and loaded on the memory card C1.

When employing the method of manufacturing a memory card according to this embodiment, the memory card C1 according to the embodiment 1 can be manufactured while employing the compression method most efficiently compressing the data of the contents.

### <Embodiment 3>

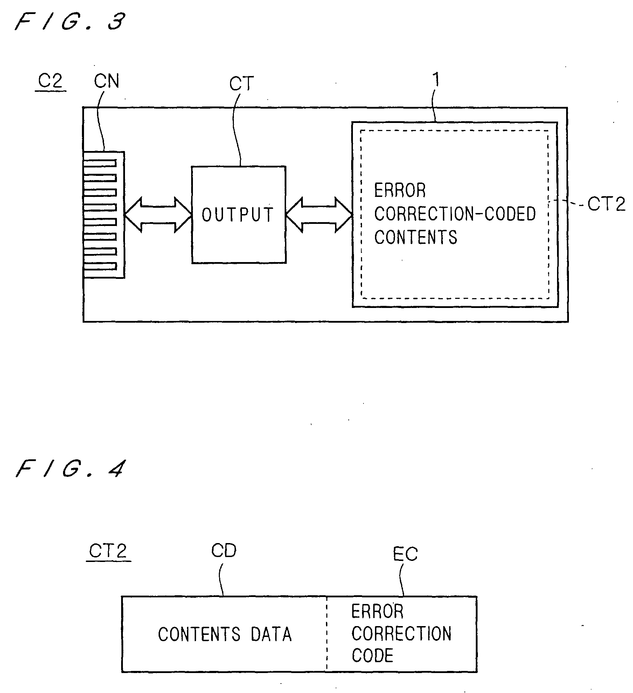

Fig. 3 illustrates a memory card C2 according to an embodiment 3 of the present invention. Referring to Fig. 3, elements having functions similar to those of the memory card C1 according to the embodiment 1 are denoted by the same reference numerals.

The memory card C2 according to this embodiment comprises a connector CN and a mask ROM 1, similarly to the memory card C1. The memory card C2 also comprises a controller CT connected to the respective ones of the connector CN and the mask ROM 1, in place of the microprocessor MP of the memory card C1. The controller CT has a function of outputting information recorded in the mask ROM 1 to an external device, similarly to the microprocessor MP. The controller CT is employed in place of the microprocessor MP since the memory card C2 according to this embodiment merely outputs the information recorded in the mask ROM 1 to the external device without performing processing such as expansion of compressed data.

The remaining structure of the memory card C2 is similar to that of the memory card C1 according to the embodiment 1, and hence redundant description is omitted.

In order to improve the quality of the information recorded in the mask ROM 1, it is desirable to record data of contents with an error correction code. An error may be mixed into the data of the contents when the data is recorded in the mask ROM 1. In order to correct such an error mixed in recording, therefore, it is desirable to record the data with the error correction code.

Referring to Fig. 3, data of contents is recorded in the mask ROM 1 as error correction-coded contents data CT2 with a prescribed error correction code. The term "prescribed error correction code" is a Reed-Solomon code or a CRC (cyclic redundancy check) code, for example. The error correction-coded contents data CT2 may conceivably be prepared by appending a 16-bit error correction code EC, for example, to contents data CD as shown in Fig. 4, for example. Alternatively, the contents of the contents data may be changed by error correction code, or contents data may be arranged in rows and columns such as product codes for appending an error correction code to each row and each column.

The information of the error correction-coded contents data CT2 having the error correction code appended thereto is output to the external device through the connector CN.

The memory card C2 according to this embodiment employs the mask ROM 1 as a semiconductor memory and hence the manufacturing cost therefor can be remarkably reduced as compared with a nonvolatile memory such as an EEPROM, and it is optimal for recording contents requiring no rewriting. The mask ROM 1 records the error correction-coded contents data CT2, whereby the external device receiving the data can improve reliability of the data by performing error correction.

This embodiment may be so modified that the mask ROM 1 further records error correction program data PR2 describing the program of an error correction method corresponding to the aforementioned error correction code, as in a memory card C3 shown in Fig. 5. A microprocessor MP may be provided in place of the controller CT for operating the error correction program data PR2, correcting an error of error correction-coded contents data CT2 and outputting the error correction-coded contents data CT2 to the external device. When the mask ROM 1 also records the program data PR2 of the prescribed error correction method along with the error correction-coded contents data CT2 and the microprocessor MP corrects an error of the error correction-coded contents data CT2 by the error correction method and outputs the error correction-coded contents data CT2 to the external device, the external device may not prepare the program data PR2 of the error correction method.

The microprocessor MP and the error correction program data PR2 may not be employed but a circuit (not shown) for error correction may be appended to an output part of the mask ROM 1 of the memory card C2 shown in Fig. 3 for correcting the error of the error correction-coded contents data CT2 and outputting the error correction-coded contents data CT2 to the external device. In this case, however, it is difficult to miniaturize the memory card C2 as compared with the case of employing the microprocessor MP and the error correction program data PR2, due to the presence of the circuit for error correction and the controller CT.

### <Embodiment 4>

An embodiment 4 of the present invention relates to a method of manufacturing the memory card C2 according to the embodiment 3.

In this embodiment, however, the error correction code is employed not only for the purpose of improving the quality of the information recorded in the mask ROM 1 but for a method of inspecting the mask ROM 1.

In a conventional method of inspecting a ROM (not restricted to a mask ROM but including a general ROM), a tester supplied with data to be recorded is supplied with output of the ROM for collating the output with the data and regards the ROM as defective when detecting a single bit of mismatch. According to this conventional method, the tester disadvantageously regards even a ROM capable of repairing data by error correction, and hence the yield of the ROM is inevitably reduced.

When employing the error correction code also for inspecting the ROM as described below, however, the yield of the ROM can be improved.

Fig. 6 is a flow chart showing the method of manufacturing the memory card C2 according to this embodiment.

First, the mask ROM 1 to be loaded on the memory card C2 is prepared and a prescribed error correction code is appended to the data of contents to be recorded for recording the data in the mask ROM 1 as the error correction-coded contents data CT2 (step S1a). Then, output of the data actually recorded in the mask ROM 1 is supplied to a tester previously supplied with the data to be recorded, for collating the data with each other (step S2a).

Then, the position, the number etc. of bits having errors are obtained from the result of collation at the step S2a, for determining whether or not these are within the range of correctability of the error correction method corresponding to the aforementioned prescribed error correction code (step S3a).

A mask ROM so determined that these are in excess of the range of the correctability is determined as defective (step S5a), while a mask ROM so determined that these are within the range of the correctability is determined as non-defective (step S4a). In the case of a Reed-Solomon code, for example, it is determined as correctable when the number of words having errors is within the range of a number smaller than half the number of parity words of the error correction code by 1 as to the error correctability.

The mask ROM 1 determined as non-defective is connected with the microprocessor MP, which in turn is connected with the connector CN to be loaded on the memory card C2 (step S6a).

When collating the error correction-coded data to be recorded with the error correction-coded data actually recorded in the mask ROM 1, determining whether or not the error correction-coded data recorded in the mask ROM 1 is within the range of the correctability of the prescribed error correction method and then determining whether or not the mask ROM 1 is defective in the aforementioned manner, the yield of the mask ROM 1 can be more improved as compared with the case of employing the conventional method of inspecting ROMs. The memory card C2 according to the embodiment 3 can be thus manufactured.

While the tester previously supplied with the data to be recorded is supplied with the output of the data actually recorded in the mask ROM 1 for collating the data with each other thereby making inspection in the aforementioned method, similar inspection can be made also by the following method:

As shown in Fig. 7, the mask ROM 1 to be loaded on the memory card C2 is first prepared for appending the prescribed error correction code to the data of contents to be recorded and recording the data in the mask ROM 1 as the error correction-coded contents data CT2 (step S1b). Then, a circuit or a microprocessor implementing the error correction method corresponding to the aforementioned error correction code is prepared and supplied with output of the data actually recorded in the mask ROM 1 for correcting an error. Then, consequently obtained corrected data is collated with the data of the source contents by a tester similarly to the conventional method of inspecting ROMs (step S2b).

Then, whether or not the corrected data can be regarded as identical to the source contents data is determined from the result of collation at the step S2b (step S3b) for determining a mask ROM 1 determined as regardable as non-defective (step S4b) while determining a mask ROM 1 determined as not regardable as defective (step S5b).

The mask ROM 1 determined as non-defective is connected with the microprocessor MP, which in turn is connected with the connector CN to be loaded on the memory card C2 (step S6b).

Thus, whether or not the mask ROM 1 is defective is determined by collating the data of the contents to be recorded with the error-corrected data actually recorded in the mask ROM 1 and determining whether or not the corrected data can be regarded as the data of the contents, whereby the yield of the mask ROM 1 can be improved also by this method as compared with the case of employing a conventional method of inspecting ROMs. The memory card C2 according to the embodiment 3 can be thus manufactured.

When recording the program data of the error correction method corresponding to the aforementioned error correction code in the mask ROM 1 as shown in the step S6b of Fig. 7 and loading the mask ROM 1 on the memory card C2 along with the microprocessor MP, it is also possible to manufacture the memory card C3 shown in Fig. 5. In this case, the loaded microprocessor MP may be employed for error correction in the aforementioned step S2b. When providing the mask ROM 1 and the microprocessor MP on a single chip and loading the chip on the memory card C3 as a system LSI, for example, the microprocessor MP in the system LSI may be employed as means for error correction without preparing a circuit or a microprocessor implementing the error correction method.

While this embodiment has been described with reference to the case of inspecting the mask ROM 1, the aforementioned method of inspecting the ROM is applicable not only to a mask ROM but also to a general ROM.

### <Embodiment 5>

Fig. 8 illustrates a memory card C4 according to an embodiment 5 of the present invention. Referring to Fig. 8, elements having functions similar to those of the memory card C2 according to the embodiment 3 are denoted by the same reference numerals.

The memory card C4 according to this embodiment comprises a connector CN, a mask ROM 1 and a controller CT, similarly to the memory card C2. The structures of these elements are similar to those of the memory card C2 according to the embodiment 3, and hence redundant description is omitted.

There is a case where the copyright of information recorded in the mask ROM 1 is to be protected or data security is to be attained. This embodiment describes that data of contents is subjected to encryption and recorded, in consideration of the above case.

Referring to Fig. 8, the mask ROM 1 records data of contents as encrypted contents data CT3 formed by encrypting the data by a prescribed encryption method. The term "prescribed encryption method" stands for the DES (data encryption standard) system or the public key cryptosystem, for example.

Due to the encryption, information related to duplication and copyright of the data is appended to the data of the contents. The term "information related to duplication and copyright of the data" stands for information as to authorization/unauthorization of duplication of the contents, information as to the number of times or the range of generations of authorization of duplication, information related to the contents producer or the like.

The information of the encrypted contents data CT3 is output to an external device through the connector CN.

The memory card C4 according to this embodiment employs the mask ROM 1 as a semiconductor memory, whereby the manufacturing cost therefor can be remarkably reduced as compared with a nonvolatile memory such as an EEPROM, and it is optimal for recording contents requiring no rewriting. Further, the mask ROM 1 records the encrypted contents data CT3, whereby the memory card C4 can protect the data.

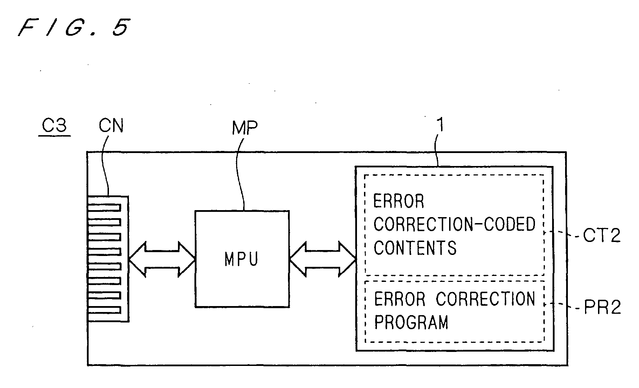

This embodiment may be so modified that the mask ROM 1 records data CT4 of contents as well as encryption program data PR3 describing the program of the aforementioned prescribed encryption method, as in a memory card C5 shown in Fig. 9. A microprocessor MP may be provided in place of the controller CT for operating the encryption program data PR3 and outputting the contents data CT4 to the external device. Thus, the memory card C4 can protect the data also by recording the program data PR3 of the prescribed encryption method in the mask ROM 1 along with the contents data CT4 so that the microprocessor MP encrypts the contents data CT4 by the encryption method and outputs the encrypted data to the external device.

### <Embodiment 6>

A memory card C6 according to an embodiment 6 of the present invention displays the purport that the memory card C6 is read-only on the surface of its package, to be distinguished from a conventional memory card.

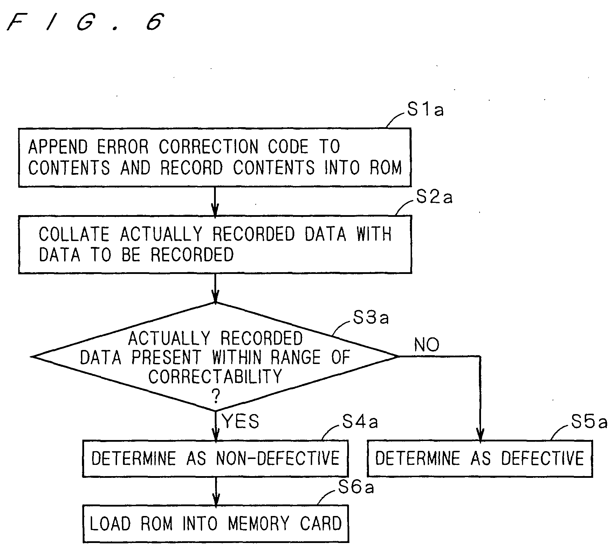

Fig. 10 shows the memory card C6, which is prepared by appending a display LB purporting that the memory card C6 is read-only on the package of any of the memory cards C1 to C5 according to the embodiments 1, 3 and 5. This display LB can be implemented by printing the same on the package surface or bonding a label of paper or a plastic film, for example.

In addition to the display LB purporting that the memory card C6 is read-only with characters as shown in Fig. 10, the memory card C6 may be distinguished from the conventional one by the color or the pattern of the package.

In the memory card C6 according to the embodiment 6, the display LB purporting that the memory card C6 is read-only is formed on the package, whereby the user can distinguish the memory card C6 from the conventional memory card through its appearance.

### <Embodiment 7>

A memory card C7 according to an embodiment 7 of the present invention is provided with a molded part ML purporting that the memory card C7 is read-only on the surface of its package, to be distinguished from a conventional memory card.

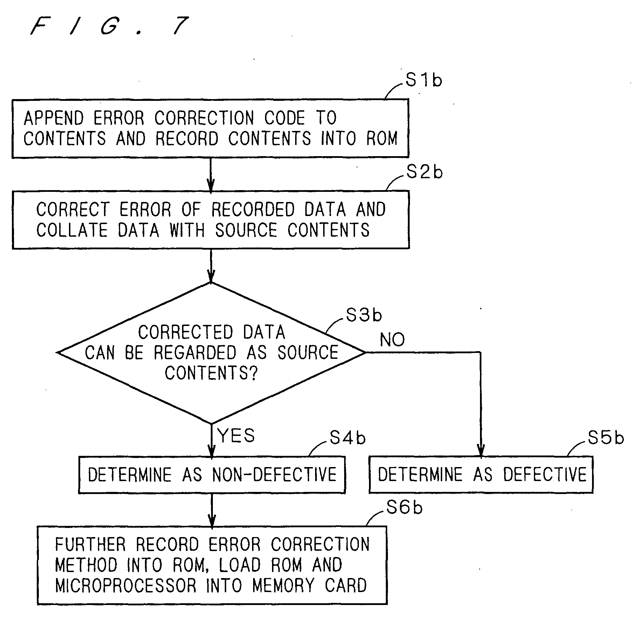

Fig. 11 shows the memory card C7, which is prepared by forming the molded part ML purporting that the memory card C7 is read-only on the package of any of the memory cards C1 to C5 according to the embodiments 1, 3 and 5. The molded part ML may be prepared from that providing a rough touch, that having regularly arranged convex portions, that embossing the characters "read-only", that showing the characters "read-only" in braille or the like, for example.

This molded part ML can be formed by partially changing a mold employed for forming the package of the conventional memory card.

In the memory card C7 according to the embodiment 7, the molded part ML purporting that the memory card C7 is read-only is formed on the surface of the package, whereby the user can distinguish the memory card C7 from the conventional memory card not only through the appearance but by the touch thereof.

### <Embodiment 8>

A memory card C8 according to an embodiment 8 of the present invention is provided with a notch CV or a hole HL purporting that the memory card C8 is read-only on the surface of its package, to be distinguished from a conventional memory card.

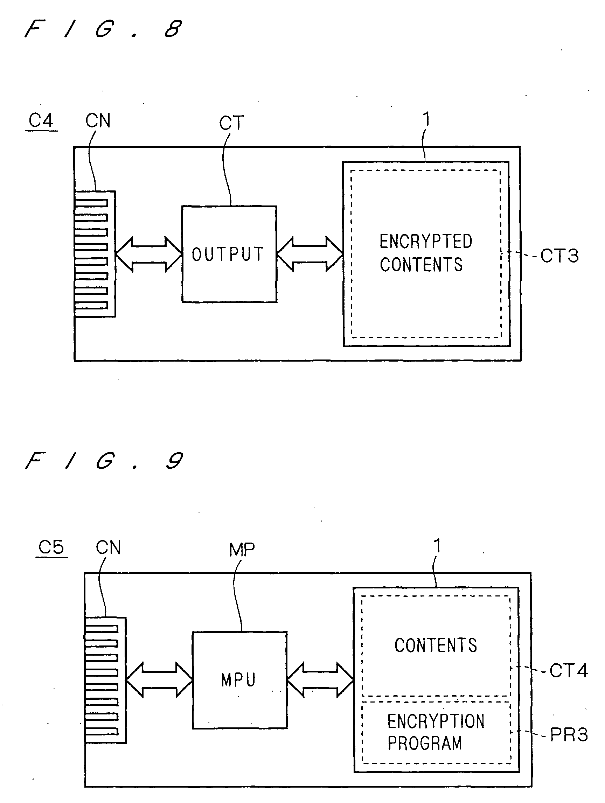

Fig. 12 shows the memory card C8, which is prepared by forming the notch CV and/or the hole HL purporting that the memory card C8 is read-only on the package of any of the memory cards C1 to C5 according to the embodiments 1, 3 and 5. Both or only one of the notch CV and the hole HL may be formed, as a matter of course.

The notch CV or the hole HL can be formed by partially changing a mold employed for forming the package of the conventional memory card.

In the memory card C8 according to the embodiment 8, the notch CV or the hole HL purporting that the memory card C8 is read-only is formed on the surface of the package, whereby a reader corresponding to the memory card C8 can distinguish the memory card C8 from the conventional memory card by mechanically or optically recognizing the notch CV or the hole HL when the memory card C8 is inserted in the reader. And furthermore, the user can distinguish the former from the latter through its appearance.

### <Embodiment 9>

A memory card C9 according to an embodiment 9 of the present invention is provided with an optical reflector RF purporting that the memory card C9 is read-only on the surface of its package, to be distinguished from a conventional memory card.

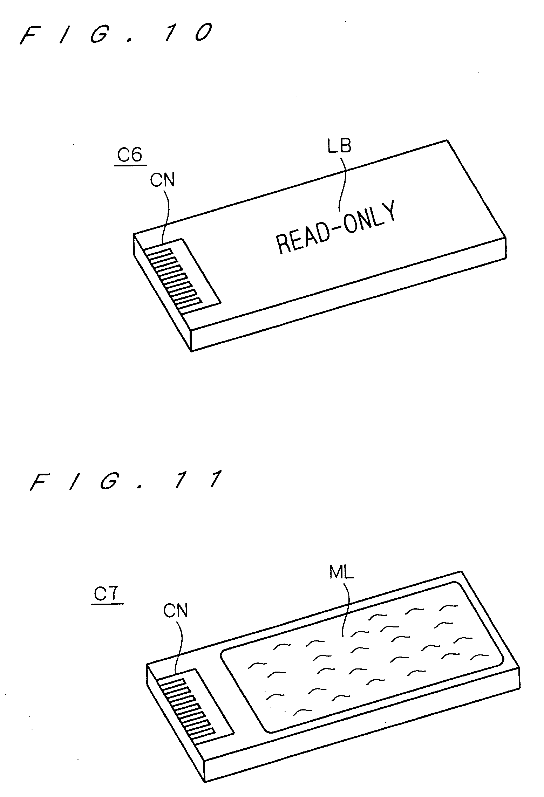

Fig. 13 shows the memory card C9, which is prepared by forming the optical reflector RF purporting that the memory card C9 is read-only on the package of any of the memory cards C1 to C5 according to the embodiments 1, 3 and 5. The optical reflector RF can be implemented by printing or bonding a metal film onto the surface of the package, for example.

In the memory card C9 according to the embodiment 9, the optical reflector RF purporting that the memory card C9 is read-only is formed on the surface of the package, whereby a reader corresponding to the memory card C9 can distinguish the memory card C9 from the conventional memory card by optically recognizing the optical reflector RF when the memory card C9 is inserted in the reader. And furthermore, the user can distinguish the former from the latter through its appearance.

### <Embodiment 10>

A memory card C10 according to an embodiment 10 of the present invention is provided with a part MG generating a magnetic field or cutting off a magnetic field purporting that the memory card C10 is read-only on the surface of its package, to be distinguished from a conventional memory card.

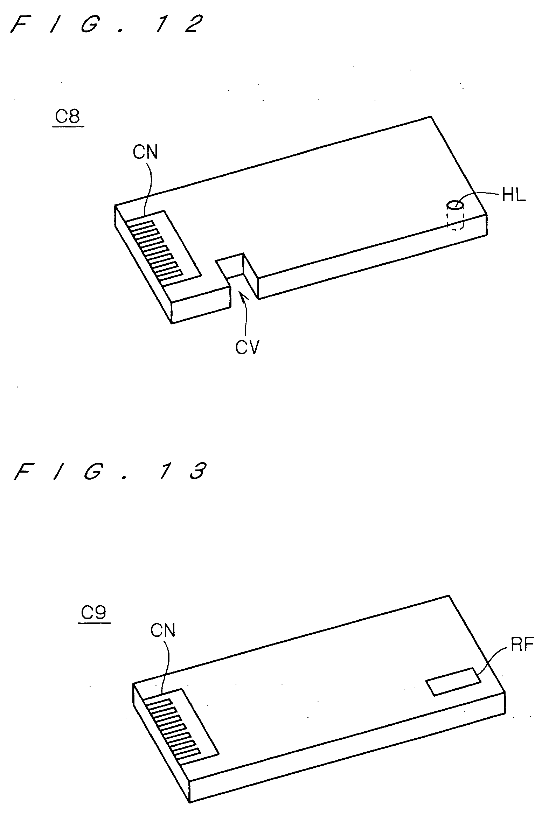

Fig. 14 shows the memory card C10, which is prepared by forming the magnetic field generation part or magnetic field cutoff part MG purporting that the memory card C10 is read-only in the package of any of the memory cards C1 to C5 according to the embodiments 1, 3 and 5. The magnetic field generation part or magnetic field cutoff part MG can be implemented by arranging a permanent magnet or an electromagnet generating a magnetic field or a high-permeability substance such as permalloy cutting off a magnetic field in the package, for example.

In the memory card C10 according to the embodiment 10, the magnetic field generation part or magnetic field cutoff part MG purporting that the memory card C10 is read-only is formed in the package, whereby a reader corresponding to the memory card C10 can distinguish the memory card C10 from the conventional memory card by magnetically recognizing the magnetic field generation part or magnetic field cutoff part MG when the memory card C10 is inserted in the reader.

### <Embodiment 11>

A memory card C11 according to an embodiment 11 of the present invention is provided with a write protect switch SW fixed to its package, to be distinguished from a conventional memory card.

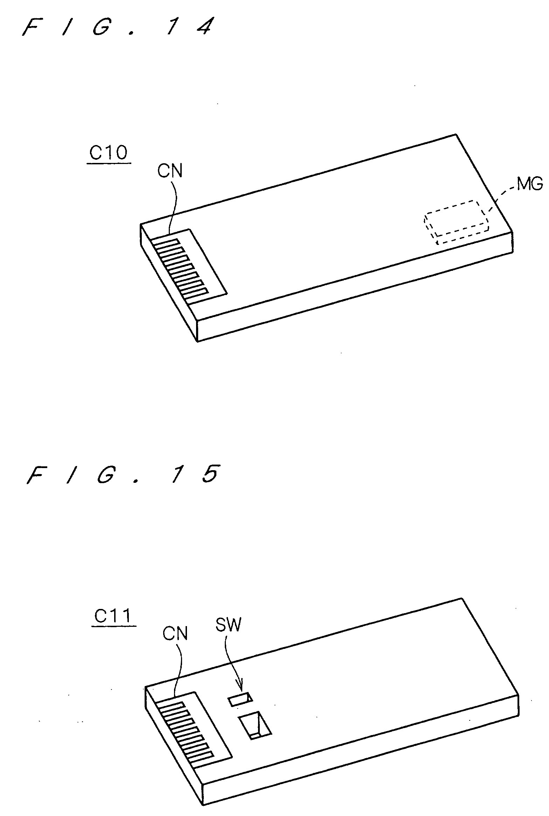

Fig. 15 shows the memory card C11, which is prepared by forming the write protect switch SW fixed to the package of any of the memory cards C1 to C5 according to the embodiments 1, 3 and 5. The fixed write protect switch SW is provided to be compatible with a write protect switch provided in the conventional memory card, and the position and the shape thereof are along those of the write protect switch of the conventional memory card.

This fixed write protect switch SW can be integrally formed with the package by partially changing a mold employed for forming the package of the conventional memory card, for example.

In addition, parts of the write protect switch of the conventional memory card may be fixed, as a matter of course.

In the memory card C11 according to the embodiment 11, the fixed write protect switch SW is so formed that a reader corresponding to the memory card C11 performs no erroneous write operation when the memory card C11 is inserted in the reader. Further, the user can distinguish the memory card C11 through its appearance.

### <Embodiment 12>

In a memory card C12 according to an embodiment 12 of the present invention, a register RG provided in a microprocessor MP records information of a state related to writing of the memory card C12.

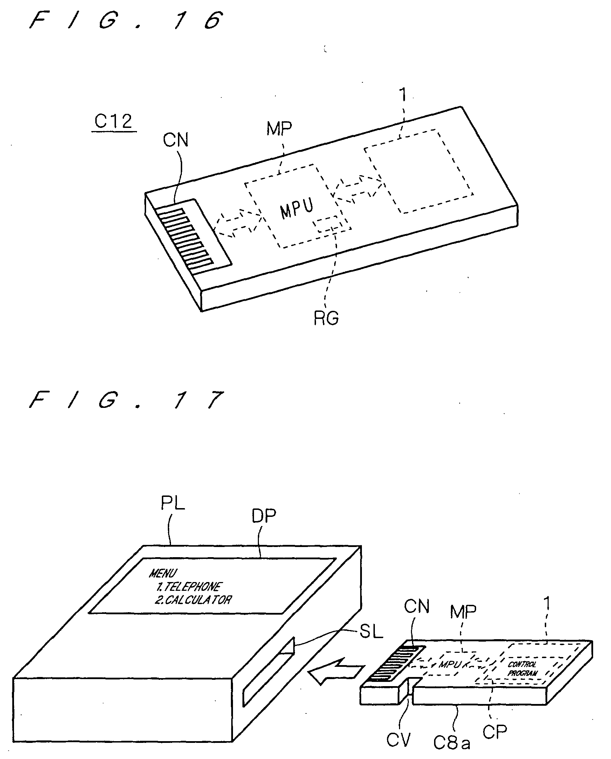

Fig. 16 shows the memory card C12, which is prepared by providing the register RG recording the information of the state related to writing of the memory card C12 in the microprocessor MP of any of the memory cards C1 to C5 according to the embodiments 1, 3 and 5. This register RG records information purporting that the memory card C12 is read-only.

When an external device attempts to write information into a mask ROM 1 through a connector CN, the microprocessor MP outputs the purport that this writing is unsuccessful to the external device on the basis of the information recorded in the register RG.

The memory card C12 according to the embodiment 12 can be distinguished from a conventional memory card by externally reading the information from the register RG. When the external device attempts to write information into the mask ROM 1, the microprocessor MP outputs the purport that this writing is unsuccessful to the external device, whereby no subsequent write operation is performed.

Also when employing the controller CT in place of the microprocessor MP, the register RG may be similarly provided in the controller CT.

### <Embodiment 13>

An embodiment 13 of the present invention relates to a reader reading data of contents from the memory card C8 according to the embodiment 8, whose function is expanded when the memory card C8 is inserted therein.

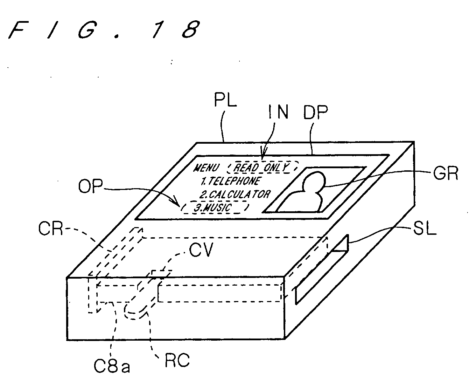

Figs. 17 and 18 show a memory card reader (= memory card player) PL according to this embodiment. Fig. 17 shows a state before insertion of a memory card C8a according to the embodiment 8, and Fig. 18 shows a state after insertion of the memory card C8a. In this embodiment, the memory card C8, which has a control program CP for controlling the reader PL in the mask ROM 1 as described later, is displayed as the memory card C8a.

The memory card player PL comprises a slot SL for holding and reading the memory card C8a and a display DP for displaying various types of information. As shown in Fig. 18, the memory card player PL has a recognition switch RC for recognizing whether or not the memory card C8a is read-only in the slot SL. The memory card player PL also has a read part CR connected to the connector CN of the memory card C8a in the slot SL.

Operation performed when the memory card C8a is inserted in the memory card player PL is now described. When the memory card C8a is inserted in the slot SL, the memory card player PL operates the recognition switch RC and confirms whether or not the memory card C8a is read-only. The memory card C8a has the notch CV, and hence the recognition switch RC recognizes the notch CV, determines that the memory card C8a is read-only and automatically reads the data of the contents recorded in the mask ROM 1 from the read part CR connected to the connector CN. Then, it lights a display IN purporting that the memory card C8a is read-only on the display DP.

When the inserted memory card is not read-only, no notch CV is present and hence the recognition switch RC incapable of recognizing the notch CV reads no contents data.

Thus, the memory card player PL comprising the recognition switch RC can automatically read the data of the contents. Further, it lights the display IN purporting that the memory card C8a is read-only on the display DP, whereby the user can determine whether the memory card is a conventional one or the memory card C8a according to the embodiment 8.

The mask ROM 1 of the memory card C8a further stores at least either a control program describing a procedure for controlling the memory card player PL or control data playing an auxiliary role when controlling the memory card player PL (the control program and the control data are hereinafter collectively referred to as the control program CP). The memory card player PL has functions (e.g., a telephone function, a calculator function etc.) in addition to reproduction of the contents of the memory card C8a, and performs any of the remaining functions when no memory card is inserted.

When the memory card C8a is inserted, the memory card player PL has the function of reproducing the contents of the memory card C8a, and further displays an expansion menu OP on the display DP. It also displays an image GR having been recorded in the mask ROM 1, for example. The control program CP recorded in the mask ROM 1 of the memory card C8a controls such an expansion function. The control program CP is read along with the data of the contents, for controlling the expansion function of the memory card player PL.

The memory card player PL according to the embodiment 13 having the recognition switch RC can automatically read the data of the contents. Further, it lights the display IN purporting that the memory card C8a is read-only on the display DP, whereby the user can determine whether the memory card is the conventional memory card or the memory card C8a according to the embodiment 8. In addition, the memory card player PL also automatically reads the control program CP for expanding its function with the control program CP, whereby the memory card player PL may not prepare the control program CP.

While this embodiment employs the memory card C8a according to the embodiment 8, it may be deformed to have recognition means responsive to each case when employing any of the memory cards C9 to C12 according to the embodiments 9 to 12.

When employing the memory card C9 according to the embodiment 9, the memory card player PL may be provided with light emission means such as a light emitting diode and light detection means such as a phototransistor detecting the light reflected by the optical reflector RF and returned as the recognition means, for example. Thus, the inserted memory card can be determined as the read-only memory card C9 according to the present invention when detecting light, while the same can be determined as a conventional memory card when detecting no light.

When employing the memory card C10 according to the embodiment 10, the memory card player PL may be provided with magnetic field generation means such as an electromagnet and magnetic field detection means such as a magnetic sensor detecting amplification or reduction of the magnetic field passing through the magnetic field generation part or magnetic field cutoff part MG as the recognition means, for example. Thus, the inserted memory card can be determined as the read-only memory card C10 according to the present invention when detecting change of the magnetic field, while the same can be determined as a conventional memory card when detecting no change of the magnetic field.

When employing the memory card C11 according to the embodiment 11, the memory card player PL may be provided with means recognizing a write protect switch provided on a memory card player corresponding to a conventional memory card. This may be mechanical recognition means such as the recognition switch RC of the aforementioned memory card player PL, or optical recognition means formed by light emission means such as a light emitting diode and light detection means such as a phototransistor detecting the light passing or reflected.

When employing the memory card C12 according to the embodiment 12, the memory card player PL may be provided with recognition means such as a signal processing circuit or a microprocessor reading the contents of the register RG.

While the invention has been shown and described in detail, the foregoing description is in all aspects illustrative and not restrictive. It is therefore understood that numerous modifications and variations can be devised without departing from the scope of the invention.

## Claims

1. A card-type recording medium comprising:
a connector for connection with an external device;
a mask ROM recording compressed data generated by compressing data of contents utilized in said external device by a prescribed compression method; and
output means connected to said connector and said mask ROM for outputting said compressed data to said external device through said connector.

2. The card-type recording medium according to claim 1, wherein
said mask ROM further records information for identifying said prescribed compression method.

3. The card-type recording medium according to claim 1, wherein
said mask ROM further records program data describing a program of a prescribed expansion method corresponding to said prescribed compression method, and
said output means includes a microprocessor connected to said connector and said mask ROM for expanding said compressed data by said prescribed expansion method with said program data and outputting consequently obtained expanded data to said external device through said connector.

4. A card-type recording medium comprising:
a connector for connection with an external device;
a mask ROM recording error correction-coded data, to which a prescribed error correction code is appended, of contents utilized in said external device; and
output means connected to said connector and said mask ROM for outputting said error correction-coded data to said external device through said connector.

5. A card-type recording medium comprising:
a connector for connection with an external device;
a mask ROM recording error correction-coded data, to which a prescribed error correction code is appended, of contents utilized in said external device; and
error correction means connected to said connector and said mask ROM for correcting an error of said error correction-coded data by a prescribed error correction method corresponding to said prescribed error correction code and outputting consequently obtained corrected data to said external device through said connector.

6. The card-type recording medium according to claim 5, wherein
said mask ROM further records program data describing a program of said prescribed error correction method corresponding to said prescribed error correction code, and
said error correction means includes a microprocessor connected to said connector and said mask ROM for correcting said error of said error correction-coded data by said prescribed error correction method with said program data and outputting said consequently obtained corrected data to said external device through said connector.

7. A card-type recording medium comprising:
a connector for connection with an external device;
a mask ROM recording data, to which information related to duplication and copyright of data is appended, of contents utilized in said external device; and
output means connected to said connector and said mask ROM for outputting said data of said contents to said external device through said connector.

8. A card-type recording medium comprising:
a connector for connection with an external device;
a mask ROM recording data of contents utilized in said external device; and
encryption means connected to said connector and said mask ROM for encrypting said contents by a prescribed encryption method and outputting consequently obtained encrypted data to said external device through said connector.

9. A card-type recording medium comprising:
a connector for connection with an external device;
a mask ROM recording data of contents utilized in said external device;
output means connected to said connector and said mask ROM for outputting said data to said external device through said connector; and
a card-type sheath sheathing said connector and said mask ROM as well as said output means, wherein
a display purporting that said card-type recording medium is read-only is made on said sheath.

10. A card-type recording medium comprising:
a connector for connection with an external device;
a mask ROM recording data of contents utilized in said external device;
output means connected to said connector and said mask ROM for outputting said data to said external device through said connector; and
a card-type sheath sheathing said connector and said mask ROM as well as said output means, wherein
a molded part purporting that said card-type recording medium is read-only is formed on the surface of said sheath.

11. A card-type recording medium comprising:
a connector for connection with an external device;
a mask ROM recording data of contents utilized in said external device;
output means connected to said connector and said mask ROM for outputting said data to said external device through said connector; and
a card-type sheath sheathing said connector and said mask ROM as well as said output means, wherein
a notch or a hole purporting that said card-type recording medium is read-only is formed on the surface of said sheath.

12. A card-type recording medium comprising:
a connector for connection with an external device;
a mask ROM recording data of contents utilized in said external device;
output means connected to said connector and said mask ROM for outputting said data to said external device through said connector; and
a card-type sheath sheathing said connector and said mask ROM as well as said output means, wherein
a light reflector purporting that said card-type recording medium is read-only is formed on the surface of said sheath.

13. A card-type recording medium comprising:
a connector for connection with an external device;
a mask ROM recording data of contents utilized in said external device;
output means connected to said connector and said mask ROM for outputting said data to said external device through said connector; and
means generating a magnetic field or means cutting off a magnetic field purporting that said card-type recording medium is read-only.

14. A card-type recording medium comprising:
a connector for connection with an external device;
a mask ROM recording data of contents utilized in said external device;
output means connected to said connector and said mask ROM for outputting said data to said external device through said connector; and
a card-type sheath sheathing said connector and said mask ROM as well as said output means, wherein
said sheath is provided with a fixed write protect switch including a write protect switch integrally formed on said sheath or a write protect switch formed by fixing a component.

15. A card-type recording medium comprising:
a connector for connection with an external device;
a mask ROM recording data of contents utilized in said external device; and
output means connected to said connector and said mask ROM for outputting said data to said external device through said connector, wherein
said output means comprises a register recording information of a state related to writing of said card-type recording medium, and
said register records information purporting that said card-type recording medium is read-only.

16. The card-type recording medium according to claim 15, wherein
when writing of information into said mask ROM is attempted from said external device through said connector,
said output means outputs the purport that said writing is unsuccessful to said external device on the basis of said information recorded in said register.

17. A card-type recording medium reader comprising:
read means reading data of contents from a card-type recording medium recording said data of said contents; and
recognition means recognizing whether or not said notch or said hole provided in said card-type recording medium according to claim 11 is present in said card-type recording medium.

18. A card-type recording medium reader comprising:
read means reading data of contents from a card-type recording medium recording said data of said contents; and
recognition means recognizing whether or not said light reflector provided in said card-type recording medium according to claim 12 is present in said card-type recording medium.

19. A card-type recording medium reader comprising:
read means reading data of contents from a card-type recording medium recording said data of said contents; and
recognition means recognizing whether or not said means generating a magnetic field or said means cutting off a magnetic field provided in said card-type recording medium according to claim 13 is present in said card-type recording medium.

20. A card-type recording medium reader comprising:
read means reading data of contents from a card-type recording medium comprising a register recording information of a state related to writing and said data of said contents; and
recognition means recognizing whether or not information purporting that said card-type recording medium is read-only is present in said register of said card-type recording medium.

21. The card-type recording medium reader according to claim 17, wherein
said card-type recording medium also records at least either a control program describing a procedure for expanding a function of said card-type recording medium reader or control data playing an auxiliary role when expanding said function of said card-type recording medium reader,
said read means automatically reads said data of said contents and at least either said control program or said control data in response to the result of recognition in said recognition means, and
said card-type recording medium reader expands said function with at least either said control program or said control data.

22. The card-type recording medium reader according to claim 17, further comprising:
display means displaying the result of recognition in said recognition means.

23. The card-type recording medium reader according to claim 18, wherein
said card-type recording medium also records at least either a control program describing a procedure for expanding a function of said card-type recording medium reader or control data playing an auxiliary role when expanding said function of said card-type recording medium reader,
said read means automatically reads said data of said contents and at least either said control program or said control data in response to the result of recognition in said recognition means, and
said card-type recording medium reader expands said function with at least either said control program or said control data.

24. The card-type recording medium reader according to claim 18, further comprising:
display means displaying the result of recognition in said recognition means.

25. The card-type recording medium reader according to claim 19, wherein
said card-type recording medium also records at least either a control program describing a procedure for expanding a function of said card-type recording medium reader or control data playing an auxiliary role when expanding said function of said card-type recording medium reader,
said read means automatically reads said data of said contents and at least either said control program or said control data in response to the result of recognition in said recognition means, and
said card-type recording medium reader expands said function with at least either said control program or said control data.

26. The card-type recording medium reader according to claim 19, further comprising:
display means displaying the result of recognition in said recognition means.

27. The card-type recording medium reader according to claim 20, wherein
said card-type recording medium also records at least either a control program describing a procedure for expanding a function of said card-type recording medium reader or control data playing an auxiliary role when expanding said function of said card-type recording medium reader,
said read means automatically reads said data of said contents and at least either said control program or said control data in response to the result of recognition in said recognition means, and
said card-type recording medium reader expands said function with at least either said control program or said control data.

28. The card-type recording medium reader according to claim 20, further comprising:
display means displaying the result of recognition in said recognition means.
